# EUROPÄISCHE PATENTSCHRIFT

(11) **EP 3 665 389 B1**
(45) Veröffentlichungstag und Bekanntmachung des Hinweises auf die Patenterteilung: **31.08.2022**
(21) Anmeldenummer: 18752761.9
(22) Anmeldetag: 09.08.2018
(51) Int. Cl.: F03D 17/00, F03D 7/02

(54) **SYSTEM ZUR ERFASSUNG UND ÜBERWACHUNG EINER DREHZAHL EINES ROTORS**
SYSTEM FOR DETECTING AND MONITORING A SPEED OF A ROTOR
SYSTÈME DE DÉTECTION ET DE SURVEILLANCE DE LA VITESSE DE ROTATION D'UN ROTOR

(30) Priorität: 09.08.2017 DE 102017118133
(43) Veröffentlichungstag der Anmeldung: 17.06.2020
(73) Patentinhaber: Wobben Properties GmbH, 26607 Aurich (DE)
(72) Erfinder: JANSSEN, Andreas, 26553 Dornum (DE); FISCHER, Steffen, 26529 Upgant-Schott (DE)
(74) Vertreter: Eisenführ Speiser
(86) Internationale Anmeldenummer: PCT/EP2018/071621
(87) Internationale Veröffentlichungsnummer: WO 2019/030321

(56) Entgegenhaltungen:
- US-A1- 2015 078 895
- US-A1- 2015 118 047
- US-A1- 2016 222 946

## Beschreibung

Die vorliegende Erfindung betrifft ein System zur Erfassung und Überwachung einer Drehzahl eines Rotors, insbesondere eines Rotors einer Windenergieanlage. Die vorliegende Erfindung betrifft ferner eine Windenergieanlage mit einem erfindungsgemäßen System zum Erfassen und Überwachen der Drehzahl des Rotors.

In vielen Anwendungsbereichen, insbesondere bei Windenergieanlagen, ist die exakte Erfassung einer Drehzahl und einer Drehlage eines rotierenden Rotors für den Betrieb der Anlage Grundvoraussetzung. Hierbei ist insbesondere die Ist-Drehzahl des Rotors für zwei sich wesentlich unterscheidende Anwendungen Voraussetzung, nämlich die Regelung der Leistung auf der einen Seite sowie die Erkennung kritischer Überdrehzahlen andererseits.

Die beiden Anwendungen der Bestimmung der Rotordrehzahl unterscheiden sich wesentlich in ihren Anforderungen bezüglich der Betriebssicherheit. Während ein Ausfall der Ist-Drehzahlbestimmung zur Leistungsregelung zu einer unvorteilhaften Regelung führt, wird ein Ausfall der Überdrehzahlerkennung im schlimmsten Fall eine Zerstörung der Anlage mit sich führen. Entsprechend wird in bisherigen Anwendungen, insbesondere im Bereich der Windenergie, die Drehzahl häufig mit handelsüblichen Drehgebern erfasst und ausgewertet. Gefährliche Überdrehzahlen, die entstehen können, wenn beispielsweise Pitch-Steuerung und -Regelung ausfallen, werden durch fliehkraftbasierte elektromechanische Schalter erkannt, die zusätzlich zu dem Drehgeber bereitgestellt sind. Ab einer definierten Überdrehzahl wird von diesen Fliehkraftschaltern ein Sicherheitskreis unterbrochen, der eine Notverstellung der Blätter in Fahnenstellung und damit ein Abschalten der Anlage einleitet.

Während die Überdrehzahlschalter sehr robust und zuverlässig sind, ist mit Ihnen allerdings der Nachteil verbunden, dass sie wartungsintensiv und aufwendig zu kalibrieren sind.

DE 10 2008 003 632 A1 beschreibt eine Windenergieanlage mit einem Rotor, der eine drehbar gelagerte Rotorwelle, eine mit der Rotorwelle verbundene Rotornabe und wenigstens ein von der Rotornabe abstehendes Rotorblatt aufweist, und mit einer Erfassungseinrichtung zur Erfassung einer Drehgeschwindigkeit des Rotors aufweist. Zur Verbesserung dieser Erfassung, insbesondere im Hinblick auf deren Zuverlässigkeit und sicherheitskritische Bedeutung, ist erfindungsgemäß eine in dem Rotor integrierte Sensoreinrichtung zur Erzeugung eines für die Drehgeschwindigkeit und/oder Drehstellung des Rotors charakteristischen Messsignals vorgesehen.

DE 10 2014 113 775 A1 beschreibt eine Windkraftanlage mit einem Rotor, der mehrere Blätter aufweist, die an einer Nabe, montiert sind, mikroinertialen Messeinheiten (MIMUs), die an jedem Blatt zur Erfassung dessen Parametersignale montiert sind, und einem Steuersystem. Das Steuersystem enthält eine Windgeschwindigkeitsberechnungseinheit, eine Windscherungsberechnungseinheit, eine Blattwinkelkompensationsbefehlsberechnungseinheit und eine Blattwinkelsteuerungseinheit. Die Windgeschwindigkeitsberechnungseinheit wird verwendet, um Windgeschwindigkeiten an den Blättern basierend wenigstens auf den erfassten Parametersignalen zu berechnen. Die Windscherungsberechnungseinheit wird verwendet, um einen charakteristischen Höhenexponenten basierend wenigstens auf den berechneten Windgeschwindigkeiten zu berechnen. Die Blattwinkelkompensationsbefehlsberechnungseinheit wird verwendet, um Blattwinkelkompensationsbefehle für die Blätter basierend wenigstens auf dem berechneten charakteristischen Höhenexponenten zu berechnen. Die Blattwinkelsteuerungseinheit wird verwendet, um die Blattwinkel der Blätter basierend auf den berechneten Blattwinkelkompensationsbefehlen einzustellen.

US 2015/118047 A1 definiert ein Verfahren zur Bestimmung der Parameter einer Windkraftanlage. Das Verfahren kann im Allgemeinen den Empfang von Signalen von mindestens einer Mikro-Inertial-Messeinheit (MIMU), die an oder in einer Komponente der Windturbine montiert ist, und die Bestimmung mindestens eines Parameters der Windturbine auf der Grundlage der von der mindestens einen MIMU empfangenen Signale umfassen.

US 2015/078895 A1 beschreibt eine Vorrichtung oder ein Verfahren zum Steuern des Profils eines Blattes an einer Windturbine mit mindestens einem ersten Blatt und einem zweiten Blatt, wobei das erste Blatt mindestens ein erstes Sensorsystem umfasst, das geeignet ist, einen ersten Blattzustand zu bestimmen, und das zweite Blatt mindestens ein zweites Sensorsystem umfasst, das geeignet ist, einen zweiten Blattzustand zu bestimmen, wobei das Profil des zweiten Blattes basierend auf dem bestimmten ersten Blattzustand und dem bestimmten zweiten Blattzustand gesteuert wird.

US 2016/222946 A1 stellt ein System zur Überwachung von Bewegungen einer Struktur, wobei das System mindestens eine an der Struktur angebrachte Trägheitsmessvorrichtung zur Erfassung von Rotationsraten und Beschleunigungswerten im erdfesten Inertialsystem umfasst, dar. Eine Zentraleinheit bestimmt einen Überwachungswert auf der Grundlage der Rotationsraten und Beschleunigungswerte unter Verwendung eines Navigationsalgorithmus. Die Erfindung bezieht sich ferner auf eine Ausgabeeinheit zur Ausgabe des Überwachungswertes.

Vor diesem Hintergrund war es eine Aufgabe der vorliegenden Erfindung, ein System bereitzustellen, das zuverlässig und ausfallsicher sowohl Drehzahl als auch Überdrehzahl eines Rotors bestimmen kann. Ferner war es eine Aufgabe der vorliegenden Erfindung, bisherige Systeme dahingehend zu verbessern, weniger Aufwand bei Wartung und Kalibrierung zu erfordern. Zumindest war es eine Aufgabe der vorliegenden Erfindung, Alternativen zu den bekannten Lösungen bereitzustellen.

Die Aufgabe wird erfindungsgemäß durch ein System zur Erfassung und Überwachung einer Drehzahl eines Rotors, insbesondere eines Rotors einer Windenergieanlage, mit wenigstens drei Sensoreinheiten gelöst. Jede Sensoreinheit weist einen Beschleunigungssensor und ein Gyroskop auf und ist dazu eingerichtet, die Drehzahl und -lage des Rotors unabhängig von den anderen Sensoreinheiten zu bestimmen. Jede Sensoreinheit weist ferner eine Kommunikationskomponente zur Kommunikation mit den weiteren Sensoreinheiten auf. Das System ist dazu eingerichtet, eine Drehzahl des Rotors durch Vergleich der von den Sensoreinheiten bestimmten Drehzahlen und -lagen ausfallsicher zu überwachen. Das System ist ferner dazu eingerichtet, bei einem Ausfall einer der Sensoreinheiten eine Normalabschaltung des überwachten Rotors, insbesondere der Windenergieanlage, einzuleiten und bei einem Ausfall mehrerer der Sensoreinheiten, insbesondere bei einem Ausfall von mindestens 50% der Sensoreinheiten, eine Notabschaltung des überwachten Rotors, insbesondere der Windenergieanlage, einzuleiten.

Das erfindungsgemäße System ermöglicht somit Erfassung von Rotordrehzahl und Überdrehzahl gleichzeitig, ohne dass dedizierte Komponenten vorzusehen sind. Damit werden bei der Installation weniger Komponenten benötigt, was den Installationsaufwand verringert. Physikalische Größen, Drehzahl und -lage des Rotors können ohne bewegte mechanische Komponenten, nämlich mittels Beschleunigungssensor und/oder Gyroskop, bestimmt werden und sind somit im Wesentlichen verschleißfrei.

Sowohl die Beschleunigungssensoren als auch die Gyroskope können vorzugsweise dreiachsig ausgeführt sein, so dass die Bestimmung der Drehzahl und -lage des Rotors unabhängig von einem Einbau der jeweiligen Sensoreinheit erfolgen kann. Die Sensoreinheit umfassend Beschleunigungssensor und Gyroskop kann ihre eigene Drehzahl und Orientierung bestimmen, ohne auf andere Einheiten angewiesen zu sein.

Eine Notabschaltung des überwachten Rotors ist beispielsweise mit erheblichem Verschleiß des Systems verbunden, der gegebenenfalls sogar eine Wartung der Komponenten erfordert, bevor der Rotor erneut in Betrieb gesetzt wird. Wenn lediglich eine oder zumindest nur wenige der Sensoreinheiten des erfindungsgemäßen Systems ausfallen, ist nicht davon auszugehen, dass eine kritische Situation, die eine Notabschaltung rechtfertigt, vorliegt. Dennoch ist ein ausfallsicheres Überwachen des Rotors nicht länger möglich, so dass der Rotor abzuschalten ist. Allerdings ist hierfür eine Normalabschaltung ausreichend, da keine besondere Dringlichkeit gegeben ist. Insbesondere kann die bestimmte Drehzahl noch mittels der nicht ausgefallenen Sensoren zuverlässig bestimmt werden. Wenn allerdings ein Anteil der ausgefallenen Sensoreinheiten signifikant, beispielsweise insbesondere mindestens 50%, beträgt, ist ein sicheres Weiterbetreiben auch kurzzeitig nichtig möglich, so dass auch in diesem Fall eine Notabschaltung des überwachten Rotors eingeleitet wird.

In einer Ausführungsform sind die Sensoreinheiten autark ausgestaltet. In diesem Zusammenhang soll autark insbesondere ausdrücken, dass zum Kalibrieren, zum Betrieb und zum Funktionieren der Sensoreinheiten keine Anforderungen an den überwachten Rotor, insbesondere zur Mitwirkung, gestellt werden. Vorzugsweise ist keine von dem Rotor bereitgestellte Stromversorgung nötig. Alternativ können die Sensoreinheiten aber auch von dem überwachten System mit Strom versorgt werden.

Das erfindungsgemäße System erfordert keine manuellen Kalibriervorgänge mehr in der Produktion oder bei der Inbetriebnahme des überwachten Rotors, insbesondere der Windenergieanlage, da die Sensoreinheit als autarke, automatisch kalibrierte Einheit, bereitgestellt ist.

In einer Ausführungsform weist die ausfallsichere Überwachung einen Performance Level PL=e gemäß IEC13849 auf.

Der Perfomance Level gemäß IEC13849 entspricht einer Wahrscheinlichkeit, mit der ein kritischer bzw. gefährlicher Ausfall des überwachten Systems verbunden ist. Ein kritischer bzw. gefährlicher Ausfall wäre beispielsweise im Fall einer Windenergieanlage eine nicht erkannte bzw. eine nicht angemessen gegengesteuerte Überdrehzahl, die zu einer Zerstörung der Windenergieanlage führt. Ein Perfomance Level PL=e entspricht einer Wahrscheinlichkeit eines solchen Ausfalls, die geringer als 10⁻⁷ pro Stunde ist. Erreicht wird diese Ausfallsicherheit dadurch, dass jede einzelne Sensoreinheit bereits eine niedrige Ausfallwahrscheinlichkeit hat und darüber hinaus die Sensoreinheiten redundant vorliegen und das System die Drehzahlen und Lagen der unterschiedlichen Sensoreinheiten zur ausfallsicheren Überwachung vergleicht.

In einer Ausführungsform ist das System dazu eingerichtet ist, einen Ausfall wenigstens einer der Sensoreinheiten dadurch zu bestimmen, dass die von den jeweiligen Sensoreinheiten bestimmten Drehzahlen um mehr als einen vorbestimmten Schwellwert voneinander abweichen.

Grundsätzlich ist jede der Sensoreinheiten zur selbständigen Bestimmung der Drehzahl und/oder Lage eingerichtet und sollte demnach zumindest den identischen Wert der Drehzahl liefern. Unterscheiden sich die von den Sensoreinheiten bestimmten Drehzahlen um mehr als einen vorbestimmten Schwellwert, beispielsweise um mehr als eine Umdrehung pro Minute bzw. um mehr als 10% des absoluten bestimmen Wertes, so ist davon auszugehen, dass wenigstens einer der Sensoreinheiten nicht korrekt funktioniert. Die Werte sind selbstverständlich nicht darauf beschränkt und können gemäß den Anforderungen des Einzelfalles gewählt sein.

In einer Ausführungsform ist die Lage der Sensoreinheiten relativ zueinander in Rotationsrichtung um die Achse des Rotors vorbestimmt, insbesondere beträgt sie etwa 120 °.

Die von den Sensoreinheiten bestimmte Lage des Rotors folgt zyklisch der gleichen Form, wobei die unterschiedliche Positionierung der Sensoreinheiten bezüglich des Rotors in Rotationsrichtung eine Phasenverschiebung der von den Sensoreinheiten bestimmten Lage entspricht. Die bekannte Relativposition der Sensoreinheiten zueinander ermöglicht ein Bestimmen einer falschen Lagebestimmung einer der Sensoreinheiten durch Vergleich der zu erwartenden Phasenverschiebung mit der tatsächlich Bestimmten. Die relative Beabstandung von etwa 120° ist insbesondere bei genau drei Sensoreinheiten vorteilhaft, da sie eine besonders einfache Berechnung ermöglicht.

In einer Ausführungsform ist das System dazu eingerichtet, einen Ausfall wenigstens einer der Sensoreinheiten dadurch zu bestimmen, dass die von einer Sensoreinheit bestimmte Lage inkonsistent ist.

Die Anordnung der Sensoreinheiten zueinander ist bekannt bzw. zumindest solange bestimmbar, solange die Sensoreinheiten korrekt funktionieren. Verändert sich die relative Lage zwischen zwei Sensoreinheiten, das heißt entspricht die von einer Sensoreinheit bestimmte Lage nicht dem erwarteten Wert und ist demnach inkonsistent, hat sich entweder eine der Sensoren physisch verlagert, das heißt ist nicht richtig montiert, oder einer der Sensoren ist ausgefallen und stellt aus diesem Grund fehlerhafte Lagen bereit. In beiden Fällen wird die Lage als inkonsistent bestimmt und kann zur weiteren Steuerung herangezogen werden.

In einer Ausführungsform ist das System dazu eingerichtet, bei einem Erkennen einer Überdrehzahl eine Notabschaltung des überwachten Rotors, insbesondere der Windenergieanlage, einzuleiten.

Durch die eingeleitete Notabschaltung wird Schaden an dem überwachten Rotor und damit das Eintreten einer gefährlichen Situation vermieden. In dem bevorzugten Ausführungsbeispiel der überwachten Windenergieanlagen ersetzt das System damit zuverlässig auch die bisher notwendigen Fliehkraftschalter zur Notabschaltung.

In einer Ausführungsform sind die Sensoreinheiten dazu vorgesehen, im Bereich der Rotorblätter der Windenergieanlage angeordnet zu werden, derart, dass die Bestimmung der Lage durch die Sensoreinheit auch für einen Blattwinkel des jeweiligen Rotorblattes indikativ ist. Demnach ermöglichen die Sensoreinheiten nicht nur die Bestimmung der Lage und der Drehzahl sondern auch der Blattwinkel der Rotorblätter und zwar vorzugsweise autark.

In einer Ausführungsform weist das System wenigstens sechs Sensoreinheiten auf, die jeweils wenigstens paarweise im Bereich eines der Rotorblätter angeordnet sind, wobei das System ferner dazu eingerichtet ist, einen Blattwinkel sämtlicher Rotorblätter mittels der jeweiligen Sensoreinheit zu bestimmen und einen Ausfall eines Sensors durch Vergleich der bestimmten Blattwinkel zu detektieren, insbesondere dann zu detektieren, wenn die Abweichung zwischen den Blattwinkeln einen vorbestimmten Schwellwert überschreitet.

Diese Weiterbildung setzt demnach auf der erfindungsgemäßen Ausfallerkennung auf und ermöglicht eine differenziertere Erkennung eines Sensorausfalls. Auch kann ein Ausfall lediglich einer Blattwinkelverstellung, d.h. eines Pitchantriebs, durch das Vorsehen redundanter Sensoren je Rotorblatt in dieser Ausführungsform detektiert werden. Die Redundanz der Sensoren je Rotorblatt ermöglicht, dass zwischen einem Ausfall oder einem Fehler des Pitchsystems und einem Sensorausfall zuverlässig unterschieden werden kann. Die Ausführungsform eignet sich für Einzelblattverstellungen genauso wie für kollektive Blattwinkelverstellungen, wobei hier beispielsweise die Wahl des Schwellwertes unterschiedlich ausfällt. Auch kann ein Differenzwinkel, wie er bei Einzelblattverstellungen zwischen den Rotorblättern vorliegen kann, vor dem Vergleich mit dem Schwellwert kompensiert werden.

In einer Ausführungsform ist jede Sensoreinheit in Form eines mikroelektronischen mechanischen Systems (MEMS) ausgestaltet.

MEMS-Systeme bieten gegenüber konventionellen Makrosystemen vor allem Vorteile in der Effizienz, besonders dem geringeren Energie- und Leistungsbedarf, und ermöglichen somit überhaupt autonome Systeme. Durch den Wegfall von Steckern und Kabeln ermöglichen MEMS-Systeme außerdem eine höhere Zuverlässigkeit.

In einer Ausführungsform weist wenigstens eine Sensoreinheit zwei redundante Beschleunigungssensoren und/oder Gyroskope, insbesondere unterschiedlicher Fabrikate, auf.

Indem die Sensoreinheit selbst bereits zwei redundante Beschleunigungssensoren und/oder Gyroskope aufweist, erhöht sich die Ausfallsicherheit jeder einzelnen Sensoreinheit selbst. Die Sensoreinheit kann durch einen Vergleich der Werte der beiden redundant vorhandenen Sensoren ermitteln, ob zumindest einer der beiden Sensoren ausgefallen ist. Wenn darüber hinaus redundante Sensoren unterschiedlicher Fabrikate verwendet werden, verringert sich die Wahrscheinlichkeit systematischer Fehler bzw. paralleler Ausfälle weiter.

Die Aufgabe wird erfindungsgemäß durch eine Windenergieanlage mit einem erfindungsgemäßen System gelöst, wobei je eine Sensoreinheit an einem, insbesondere innerhalb eines, Rotorblattes der Windenergieanlage angeordnet ist.

Die Steuerung der erfindungsgemäßen Windenergieanlage basierend auf dem erfindungsgemäßen System zur Überwachung des Rotors ermöglicht eine sichere Drehzahlüberwachung und Überdrehzahlüberwachung ohne dedizierte Komponenten für jede einzelne der Funktionen vorsehen zu müssen. Insbesondere die Anbringung innerhalb des Rotorblattes ermöglicht zusätzlich die Bestimmung eines Pitchwinkels der jeweiligen Rotorblätter, so dass auch die Überwachung des Pitchwinkels in das gleiche System und die gleichen Sensoreinheiten integrierbar ist.

Die Aufgabe wird erfindungsgemäß weiter durch ein Verfahren zur Erfassung und Überwachung einer Drehzahl eines Rotors, insbesondere eines Rotors einer Windenergieanlage, gelöst. Das Verfahren umfasst: Bestimmen der Drehzahl und Lage des Rotors mittels wenigstens drei Sensoreinheiten, wobei jede Sensoreinheit einen Beschleunigungssensor und ein Gyroskop aufweist und dazu eingerichtet ist, die Drehzahl und Lage des Rotors unabhängig von den anderen Sensoreinheiten zu bestimmen, Kommunizieren der von den Sensoreinheiten erfassten Drehzahl und/oder Lage und ausfallsicheres Überwachen der Drehzahl des Rotors durch Vergleich der von den Sensoreinheiten bestimmten Drehzahlen und Lagen, wobei bei einem Ausfall einer der Sensoreinheiten eine Normalabschaltung des überwachten Rotors, insbesondere der Windenergieanlage, eingeleitet wird und bei einem Ausfall mehrerer der Sensoreinheiten, insbesondere bei einem Ausfall von mindestens 50% der Sensoreinheiten, eine Notabschaltung des überwachten Rotors, insbesondere der Windenergieanlage, eingeleitet wird.

Das erfindungsgemäße Verfahren ermöglicht die gleichen Vorteile wie mit Verweis auf das erfindungsgemäße System bzw. auch die besondere Ausgestaltung der Windenergieanlage beschrieben. Besondere Ausführungsformen des erfindungsgemäßen Systems sind genauso auf das erfindungsgemäße Verfahren übertragbar.

Weitere Vorteile der Erfindung werden im Folgenden mit Verweis auf das Ausführungsbeispiel der beigefügten Figuren beschrieben. Hierbei zeigen:
- Fig.1: schematisch und exemplarisch eine Windenergieanlage und
- Fig.2: schematisch und exemplarisch ein erfindungsgemäßes System zur Erfassung und Überwachung einer Drehzahl eines Rotors.

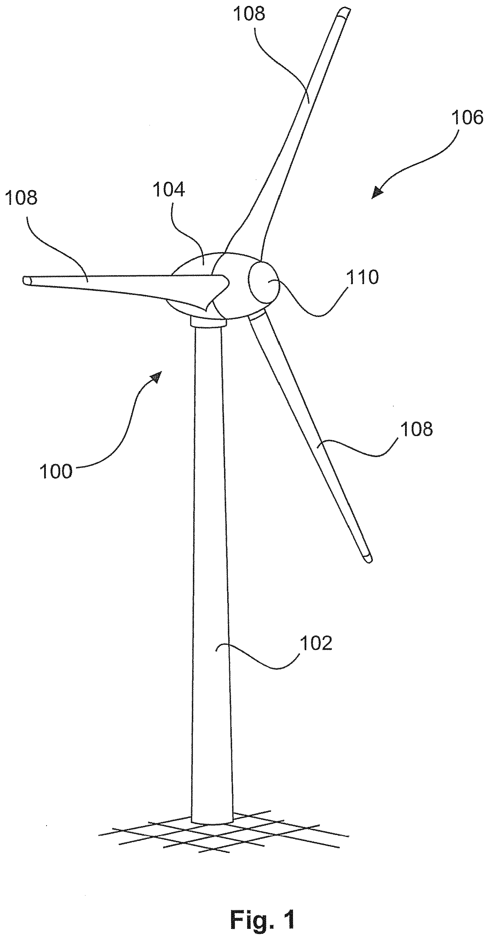

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

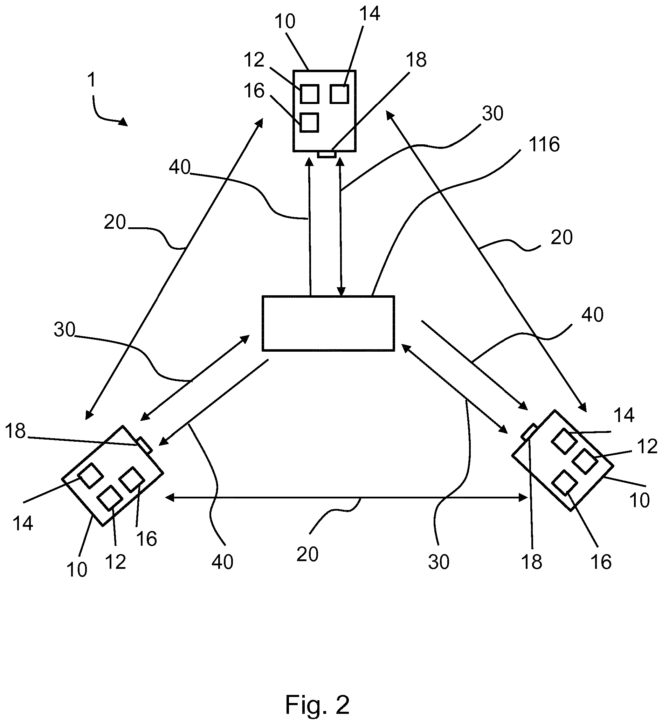

Fig. 2 zeigt schematisch und exemplarisch ein erfindungsgemäßes System 1 zur Erfassung und Überwachung einer Drehzahl eines Rotors, wie beispielsweise des Rotors 106 der in Fig. 1 gezeigten Windenergieanlage 100.

Das System 1 umfasst in diesem Ausführungsbeispiel genau drei Sensoreinheiten 10, die in einem Winkel von etwa 120° zueinander angeordnet sind und mit dem Rotor rotieren. In anderen Beispielen können auch mehr als drei Sensoreinheiten 10 bereitgestellt sein.

Jede der Sensoreinheiten 10 weist einen Beschleunigungssensor 12, ein Gyroskop 14, einen Mikrokontroller 16 sowie eine Kommunikationsschnittstelle 18 auf. Die Sensoreinheit 10 ist unabhängig von den anderen Sensoreinheiten 10 geeignet, die Drehzahl und Lage des Rotors zu bestimmen. Hierfür wertet der Mikrokontroller 16 die gemessenen Beschleunigungen bzw. Lagen des Beschleunigungssensors 12 und des Gyroskops 14 aus. Der Mikrokontroller 16 allgemein als jede Form von elektronischen Schaltungen zu verstehen, die zu der beschriebenen Verarbeitung geeignet sind. So kann die Mikrokontroller 16 beispielsweise einen Prozessor, ein FPGA und/oder mehrere räumlich verteilte dieser Elemente umfassen.

Die verlässliche und ausfallsichere Überwachung der Drehzahl ermöglicht das System 1 durch den Verbund der exemplarisch drei gezeigten Sensoreinheiten 10. Über die Kommunikationsschnittstelle 18 können die drei Sensoreinheiten 10 untereinander, beispielsweise über einen CAN-Bus 20, kommunizieren. In anderen Ausführungsbeispielen sind auch andere Kommunikationsschnittstellen, beispielsweise drahtlose Kommunikationsschnittstellen geeignet. Beispielsweise kann der Mikrokontroller 16 im 1ms-Takt über die Kommunikationsschnittstelle 18 sowohl Ist-Rotordrehzahl, Ist-Rotordrehlage als auch Ist-Rotorbeschleunigung bereitstellen. Jede der Sensoreinheiten 10 überprüft im Betrieb die richtige Funktion der anderen Sensoreinheiten 10 des Verbundes. Die bestimmten Ist-Rotordrehzahlen und Ist-Rotorbeschleunigungen, die von den verschiedenen Sensoreinheiten 10 gemessen werden, sollten übereinstimmen, wohingegen die bestimmten Ist-Rotorlagen zueinander um den bekannten Einbauabstand versetzt erfasst werden. Wenigstens eine der Sensoreinheiten 10 ist über eine weitere Kommunikationsverbindung 30 mittels der Kommunikationsschnittstelle 18 mit einer Steuerung 116 des überwachten Rotors, beispielsweise der Windenergieanlage verbunden. In dem Beispiel sind sämtliche der Sensoreinheiten 10 mit der Steuerung 116 über die Kommunikationsverbindung 30 verbunden, in anderen Beispielen kann auch nur eine oder einige der Sensoreinheiten 10 eine derartige Kommunikation ermöglichen. Auch die Kommunikationsverbindung 30 kann beispielsweise als CAN-Bus oder als andere bekannte Kommunikationsverbindung ausgebildet sein. Die Steuerung 116 kann auf die von den Sensoreinheiten 10 bereitgestellten Signale reagieren, beispielsweise die Drehzahl regeln oder auch bei Erkennen einer Überdrehzahl ein Abschalten des Rotors initiieren.

Schließlich ist jede der Sensoreinheiten 10 über eine Stromversorgung 40 an den überwachten Rotor gekoppelt, die eine Versorgung der jeweiligen Sensoreinheit 10 mit elektrischer Energie sicherstellt. In anderen Ausführungsbeispielen können die Sensoreinheiten 10 auch autonom ausgestaltet sein und beispielsweise zum Betrieb notwendige Energie aus auf die Sensoreinheit 10 wirkenden Beschleunigungen, etc., gewinnen. Bei einer Kombination von drahtlosen Übertragungstechniken zwischen Sensoreinheiten 10 und Steuerung 116 sowie einer autonomen Energieversorgung der Sensoreinheiten 10 sind überhaupt keine elektrischen Verbindungen zwischen rotierenden Sensoreinheiten 10 und feststehenden Elementen des überwachten Rotors notwendig.

## Patentansprüche

1. System (1) zur Erfassung und Überwachung einer Drehzahl eines Rotors (106), insbesondere eines Rotors einer Windenergieanlage (100), mit wenigstens drei Sensoreinheiten (10), wobei
jede Sensoreinheit (10) einen Beschleunigungssensor (12) und ein Gyroskop (14) aufweist und dazu eingerichtet ist, die Drehzahl und Lage des Rotors (106) unabhängig von den anderen Sensoreinheiten (10) zu bestimmen,
wobei jede Sensoreinheit (10) ferner eine Kommunikationskomponente (16, 18) zur Kommunikation mit den weiteren Sensoreinheiten (10) aufweist,
**dadurch gekennzeichnet, dass**
das System (1) dazu eingerichtet ist, eine Drehzahl des Rotors durch Vergleich der von den Sensoreinheiten (10) bestimmten Drehzahlen und Lagen ausfallsicher zu überwachen,
wobei das System (1) ferner dazu eingerichtet ist, bei einem Ausfall einer der Sensoreinheiten (10) eine Normalabschaltung des überwachten Rotors (106), insbesondere der Windenergieanlage (100), einzuleiten und bei einem Ausfall mehrerer der Sensoreinheiten (10) insbesondere bei einem Ausfall von mindestens 50% der Sensoreinheiten, eine Notabschaltung des überwachten Rotors, insbesondere der Windenergieanlage, einzuleiten.

2. System nach Anspruch 1, wobei die Sensoreinheiten (10) autark ausgestaltet sind.

3. System nach Anspruch 1 oder 2, wobei die ausfallsichere Überwachung einen Performance Level PL=e gemäß IEC13849 aufweist.

4. System nach einem der vorstehenden Ansprüche, wobei
das System (1) dazu eingerichtet ist, einen Ausfall wenigstens einer der Sensoreinheiten (10) dadurch zu bestimmen, dass die von den jeweiligen Sensoreinheiten (10) bestimmten Drehzahlen um mehr als einen vorbestimmten Schwellwert voneinander abweichen.

5. System nach einem der vorstehenden Ansprüche, wobei
die Lage der Sensoreinheiten (10) relativ zueinander in Rotationsrichtung um die Achse des Rotors (106) vorbestimmt ist, insbesondere etwa 120 ° beträgt.

6. System nach einem der vorstehenden Ansprüche, wobei
das System (1) dazu eingerichtet ist, einen Ausfall wenigstens einer der Sensoreinheiten (10) dadurch zu bestimmen, dass die von einer Sensoreinheit (10) bestimmte Lage inkonsistent ist.

7. System nach einem der vorherstehenden Ansprüche, wobei das System (1) dazu eingerichtet ist, bei einem Erkennen einer Überdrehzahl eine Notabschaltung des überwachten Rotors (106), insbesondere der Windenergieanlage (100), einzuleiten.

8. System nach einem der vorherstehenden Ansprüche, wobei die Sensoreinheiten (10) dazu vorgesehen sind, im Bereich der Rotorblätter (108) der Windenergieanlage (100) angeordnet zu werden, derart, dass die Bestimmung der Lage durch die Sensoreinheit (10) auch für einen Blattwinkel des jeweiligen Rotorblattes (108) indikativ ist.

9. System nach Anspruch 8, wobei das System (1) wenigstens sechs Sensoreinheiten (10) aufweist, die jeweils wenigstens paarweise im Bereich eines der Rotorblätter (108) angeordnet sind, wobei das System (1) ferner dazu eingerichtet ist, einen Blattwinkel sämtlicher Rotorblätter (108) mittels der jeweiligen Sensoreinheiten (10) zu bestimmen und einen Ausfall eines Sensors durch Vergleich der bestimmten Blattwinkel zu detektieren, insbesondere dann zu detektieren, wenn die Abweichung zwischen den Blattwinkeln einen vorbestimmten Schwellwert überschreitet.

10. System nach einem der vorherstehenden Ansprüche, wobei jede Sensoreinheit (10) in Form eines mikroelektronischen mechanischen Systems (MEMS) ausgestaltet ist.

11. System nach einem der vorherstehenden Ansprüche, wobei wenigstens eine Sensoreinheit (10) zwei redundante Beschleunigungssensoren (12) und/oder Gyroskope (14), insbesondere unterschiedlicher Fabrikate, aufweist.

12. Windenergieanlage mit einem System nach einem der vorstehenden Ansprüche, wobei je eine Sensoreinheit (10) an einem, insbesondere innerhalb eines, Rotorblattes (108) der Windenergieanlage angeordnet ist.

13. Verfahren zur Erfassung und Überwachung einer Drehzahl eines Rotors (106), insbesondere eines Rotors (106) einer Windenergieanlage (100), wobei das Verfahren aufweist:
Bestimmen der Drehzahl und Lage des Rotors (106) mittels wenigstens drei Sensoreinheiten (10), wobei jede Sensoreinheit (10) einen Beschleunigungssensor (12) und ein Gyroskop (14) aufweist und dazu eingerichtet ist, die Drehzahl und Lage des Rotors unabhängig von den anderen Sensoreinheiten zu bestimmen,
Kommunizieren der von den Sensoreinheiten erfassten Drehzahl und/oder Lage,
**gekennzeichnet durch**
ausfallsicheres Überwachen der Drehzahl des Rotors durch Vergleich der von den Sensoreinheiten bestimmten Drehzahlen und Lagen, wobei bei einem Ausfall einer der Sensoreinheiten (10) eine Normalabschaltung des überwachten Rotors (106), insbesondere der Windenergieanlage (100), eingeleitet wird und bei einem Ausfall mehrerer der Sensoreinheiten (10), insbesondere bei einem Ausfall von mindestens 50% der Sensoreinheiten, eine Notabschaltung des überwachten Rotors, insbesondere der Windenergieanlage, eingeleitet wird.

## Claims

1. System for detecting and monitoring a speed of a rotor (106), in particular of a rotor of a wind turbine (100), having at least three sensor units (10), wherein
each sensor unit (10) has an acceleration sensor (12) and a gyroscope (14) and is configured to determine the speed and position of the rotor (106) independently of the other sensor units (10),
wherein each sensor unit (10) further has a communication component (16, 18) for communication with the other sensor units (10),
**characterised in that** the system (1) is configured to monitor a speed of the rotor in a fail-safe manner by comparing the speeds and positions determined by the sensor units (10), wherein the system (1) is further configured in the event of a failure of one of the sensor units (10) to initiate a normal shutdown of the monitored rotor (106), in particular of the wind turbine (100), and in the event of a failure of a plurality of the sensor units (10), in particular in the event of a failure of at least 50% of the sensor units, to initiate an emergency shutdown of the monitored rotor, in particular of the wind turbine.

2. System according to claim 1, wherein the sensor units (10) are constructed to be autonomous.

3. System according to claim 1 or 2, wherein the fail-safe monitoring has a performance level PL=e in accordance with IEC 13849.

4. System according to any one of the preceding claims, wherein the system (1) is configured to determine a failure of at least one of the sensor units (10) in that the speeds determined by the respective sensor units (10) differ from each other by more than a predetermined threshold value.

5. System according to any one of the preceding claims, wherein the position of the sensor units (10) relative to each other in a rotation direction about the axis of the rotor is predetermined, in particular is approximately 120°.

6. System according to any one of the preceding claims, wherein the system (1) is configured to determine a failure of at least one of the sensor units (10) in that the position determined by a sensor unit (10) is inconsistent.

7. System according to any one of the preceding claims, wherein the system (1) is configured in the event of identification of an excess speed to initiate an emergency shutdown of the monitored rotor (106), in particular of the wind turbine (100).

8. System according to any one of the preceding claims, wherein the sensor units (10) are provided to be arranged in the region of the rotor blades (108) of the wind turbine (100) in such a manner that the determination of the position by the sensor unit (10) is also indicative of a blade angle of the respective rotor blade (108).

9. System according to claim 8, wherein the system (1) has at least six sensor units (10) which are each arranged at least in pairs in the region of one of the rotor blades (108), wherein the system (1) is further configured to determine a blade angle of all the rotor blades (108) by means of the respective sensor units (10) and to detect a failure of a sensor by comparing the determined blade angles, in particular to detect when the deviation between the blade angles exceeds a predetermined threshold value.

10. System according to any one of the preceding claims, wherein each sensor unit (10) is in the form of a micro-electromechanical system (MEMS).

11. System according to any one of the preceding claims, wherein at least one sensor unit (10) has two redundant acceleration sensors (12) and/or gyroscopes (14), in particular from different manufacturers.

12. Wind turbine having a system according to any one of the preceding claims, wherein a sensor unit (10) is arranged in each case on, in particular inside, a rotor blade (108) of the wind turbine.

13. Method for detecting and monitoring a speed of a rotor (106), in particular of a rotor (106) of a wind turbine (100), wherein the method involves:
determining the speed and position of the rotor (106) by means of at least three sensor units (10), wherein
each sensor unit (10) has an acceleration sensor (12) and a gyroscope (14) and is configured to determine the speed and position of the rotor independently of the other sensor units,
communicating the speed and/or position detected by the sensor units,
**characterised by** fail-safe monitoring of the speed of the rotor by comparing the speeds and positions determined by the sensor units, wherein, in the event of a failure of one of the sensor units (10), a normal shutdown of the monitored rotor (106), in particular of the wind turbine (100), is initiated and, in the event of a failure of a plurality of the sensor units (10), in particular in the event of a failure of at least 50% of the sensor units, an emergency shutdown of the monitored rotor, in particular of the wind turbine, is initiated.

## Revendications

1. Système (1) de détection et de surveillance d'une vitesse de rotation d'un rotor (106), en particulier d'un rotor d'une éolienne (100), avec au moins trois unités de capteur (10), dans lequel
chaque unité de capteur (10) présente un capteur d'accélération (12) et un gyroscope (14) et est mise au point pour définir la vitesse de rotation et la position du rotor (106) indépendamment des autres unités de capteur (10),
dans lequel chaque unité de capteur (10) présente en outre une composante de communication (16, 18) destinée à la communication avec les autres unités de capteur (10),
**caractérisé en ce que**
le système (1) est mis au point pour surveiller avec fiabilité une vitesse de rotation du rotor par comparaison des vitesses de rotation et positions définies par les unités de capteur (10),
dans lequel le système (1) est mis au point en outre pour initier, dans le cas d'une panne d'une des unités de capteur (10), un arrêt normal du rotor (106) surveillé, en particulier de l'éolienne (100), et pour initier, dans le cas d'une panne de plusieurs des unités de capteur (10), en particulier dans le cas d'une panne d'au moins 50 % des unités de capteur, un arrêt d'urgence du rotor surveillé, en particulier de l'éolienne.

2. Système selon la revendication 1, dans lequel les unités de capteur (10) sont configurées de manière autonome.

3. Système selon la revendication 1 ou 2, dans lequel la surveillance fiable présente un niveau de performance ou Performance Level PL=e selon la norme IEC13849.

4. Système selon l'une quelconque des revendications précédentes, dans lequel
le système (1) est mis au point pour définir une panne d'au moins une des unités de capteur (10) en ce que les vitesses de rotation définies par les unités de capteur (10) respectives divergent les unes des autres d'une valeur supérieure à une valeur de seuil prédéfinie.

5. Système selon l'une quelconque des revendications précédentes, dans lequel
la position des unités de capteur (10) les unes par rapport aux autres est prédéfinie autour de l'axe du rotor (106) dans une direction de rotation, en particulier est d'environ 120°.

6. Système selon l'une quelconque des revendications précédentes, dans lequel
le système (1) est mis au point pour définir une panne d'au moins une des unités de capteur (10) en ce que la position définie par une unité de capteur (10) est incohérente.

7. Système selon l'une quelconque des revendications précédentes, dans lequel le système (1) est mis au point pour initier, lors d'une identification d'une vitesse de rotation excessive, un arrêt d'urgence du rotor (106) surveillé, en particulier de l'éolienne (100) .

8. Système selon l'une quelconque des revendications précédentes, dans lequel les unités de capteur (10) sont prévues pour être disposées dans la zone des pales de rotor (108) de l'éolienne (100) de telle manière que la définition de la position par l'unité de capteur (10) indique également un angle de pale de la pale de rotor (108) respective.

9. Système selon la revendication 8, dans lequel le système (1) présente au moins six unités de capteur (10), qui sont disposées respectivement au moins par paire dans la zone d'une des pales de rotor (108), dans lequel le système (1) est mis au point en outre pour définir un angle de pale de toutes les pales de rotor (108) au moyen des unités de capteur (10) respectives et pour détecter une panne d'un capteur par comparaison des angles de pale définis, en particulier pour la détecter quand la divergence entre les angles de pale dépasse une valeur de seuil prédéfinie.

10. Système selon l'une quelconque des revendications précédentes, dans lequel chaque unité de capteur (10) est configurée sous la forme d'un système mécanique microélectronique (MEMS).

11. Système selon l'une quelconque des revendications précédentes, dans lequel au moins une unité de capteur (10) présente deux capteurs d'accélération (12) et/ou gyroscopes (14) redondants, en particulier de marques différentes.

12. Eolienne avec un système selon l'une quelconque des revendications précédentes, dans laquelle respectivement une unité de capteur (10) est disposée sur une, en particulier à l'intérieur d'une, pale de rotor (108) de l'éolienne.

13. Procédé de détection et de surveillance d'une vitesse de rotation d'un rotor (106), en particulier d'un rotor (106) d'une éolienne (100), dans lequel le procédé présente :
la définition de la vitesse de rotation et de la position du rotor (106) au moyen d'au moins trois unités de capteur (10), dans lequel chaque unité de capteur (10) présente un capteur d'accélération (12) et un gyroscope (14) et est mise au point pour définir la vitesse de rotation et la position du rotor indépendamment des autres unités de capteur,
la communication de la vitesse de rotation et/ou de la position détectées par les unités de capteur,
**caractérisé par**
la surveillance avec fiabilité de la vitesse de rotation du rotor en comparant les vitesses de rotation et positions définies par les unités de capteur, dans lequel dans le cas d'une panne d'une des unités de capteur (10), un arrêt normal du rotor (106) surveillé, en particulier de l'éolienne (100), est initié et dans le cas d'une panne de plusieurs des unités de capteur (10), en particulier dans le cas d'une panne d'au moins 50 % des unités de capteur, un arrêt d'urgence du rotor surveillé, en particulier de l'éolienne, est initié.
